# EUROPÄISCHE PATENTSCHRIFT

(11) **EP 0 871 052 B1**
(45) Veröffentlichungstag und Bekanntmachung des Hinweises auf die Patenterteilung: **14.01.2004**
(21) Anmeldenummer: 98105816.7
(22) Anmeldetag: 31.03.1998
(51) Int. Cl.: G02B 21/00, G01N 21/89

(54) **Konfokales Mikroskop mit einem motorischen Scanningtisch**
Confocal microscope with movable scanning table
Microscope confocal avec support d'échantillon de balayage mobile

(30) Priorität: 07.04.1997 DE 19714221
(43) Veröffentlichungstag der Anmeldung: 14.10.1998
(73) Patentinhaber: Carl Zeiss, 89518 Heidenheim (Brenz) (DE); CARL-ZEISS-STIFTUNG, HANDELND ALS CARL ZEISS, 89518 Heidenheim (Brenz) (DE)
(72) Erfinder: Derndinger, Eberhard, 73430 Aalen (DE); Ott, Peter, 73430 Aalen (DE); Czarnetzki, Norbert, 07747 Jena (DE); Scherübl, Thomas, Dr., 07745 Jena (DE)

(56) Entgegenhaltungen:
- WO-A-96/39619
- US-A- 5 544 338
- US-A- 5 649 022

## Beschreibung

Ein konfokales Mikroskop mit einem motorischen Scanningtisch zum Bewegen einer Probe senkrecht zur optischen Achse des Mikroskopes ist aus der US 5 239 178 bekannt. Das Mikroskop weist weiterhin ein Lichtquellenarray in einer zur Fokusebene eines Objektivs konjugierten Ebene und ein Detektorarray mit einer Vielzahl lichtempfindlicher Elemente ebenfalls in einer zur Fokusebene des Mikroskopobjektivs konjugierten Ebene auf. Die Bewegung der Probe senkrecht zur optischen Achse des Mikroskopes erfolgt bei diesem konfokalen Mikroskop primär im mikroskopischen Bereich, um die ansonsten durch den Rasterabstand des Lichtquellenarrays definierte Auflösung senkrecht zur optischen Achse zu erhöhen.

Eine Erfassung großer Objektfelder, die wesentlich größer als das in einem Bild übertragene Sehfeld des Objektivs sind, ist mit diesem konfokalen Mikroskop nur beschränkt möglich. Es müssen Serien von Einzelbildern des Objektes aufgenommen werden, zwischen denen das Objekt jeweils um eine dem Bildfelddurchmesser entsprechende Wegstrecke verschoben werden muß.

Ein, allerdings nicht konfokales, Nomarskimikroskop, das zur Aufzeichnung und Abspeicherung entsprechender Bildserien ausgelegt ist, ist beispielsweise in der EP 0 444 450-A1 beschrieben. Da dieses Nomarskimikroskop nicht konfokal ist, weist es nur eine geringe Auflösung in Richtung der optischen Achse auf. Außerdem ist auch dieses Mikroskop viel zu langsam, wenn die Bildinformation einer großen Bildfeldzahl erfaßt werden muß. Das Erfassen großer Objektfelder in kürzester Zeit bei gleichzeitig hoher Auflösung ist jedoch bei Inspektionsgeräten, die im Herstellungsprozeß beispielsweise in der Halbleiterindustrie oder bei der LCD-Herstellung eingesetzt werden, zwingend erforderlich.

In der US 5 264 912 ist ein ebenfalls nicht konfokales Mikroskop für die Wafer-Inspektion beschrieben, bei dem in der Fourierebene des Objektivs eine Filterung erfolgt. Die Transmissionscharakteristik des Raumfilters in der Fourierebene entspricht dabei der inversen Beugungsfigur des herzustellenden integrierten Schaltkreises (IC); es transmittiert demzufolge nur dann Licht, wenn das Beugungsbild des momentan abgebildeten ICs vom Beugungsbild des Soll-ICs abweicht, woraus dann geschlossen wird, daß auch die Struktur des beobachteten ICs von der Sollstruktur abweicht. Als Lichtdetektor ist bei diesem Mikroskop ein CCD-Array oder alternativ ein High-Speed-Multiple-Output Time Delay Integration (TDI) Sensor vorgesehen. Eine Begründung für den Einsatz eines TDI Sensors ist jedoch nicht angegeben. Außerdem weist auch dieses Mikroskop wegen der nicht-konfokalen Anordnung nur eine geringe Auflösung in Richtung der optischen Achse auf.

Aus der US 5 365 084 ist desweiteren eine Anordnung zur Untersuchung eines laufenden Gewebebandes bei dessen Herstellung bekannt, bei der zur Lichtdetektion ein mit der Bewegung des Gewebebandes synchronisierter TDI Sensor vorgesehen ist. Eine solche Videoinspektionseinrichtung kommt jedoch wegen ihrer geringen Auflösung sowohl in Richtung der optischen Achse als auch senkrecht zur optischen Achse für die Inspektion von Halbleitern im Herstellungsprozeß nicht in Betracht.

Die vorliegende Erfindung soll eine Anordnung angeben, die für die optische Inspektion von Halbleitern im Herstellprozeß einsetzbar ist. Mit dieser Anordnung soll sowohl eine ausreichende Auflösung in Richtung als auch senkrecht zur optischen Achse erzielbar sein. Gleichzeitig sollen große Bildfelder in kürzester Zeit erfaßbar sein.

Dieses Ziel wird durch eine Anordnung mit den Merkmalen des Anspruches 1 gelöst. Vorteilhafte Ausgestaltungen der Erfindung ergeben sich aus den Merkmalen der abhängigen Ansprüche.

Die erfindungsgemäße Anordnung ist ein konfokales Mikroskop mit einem motorischen Scanningtisch zum Bewegen der Probe senkrecht zur optischen Achse des Mikroskopes. Es weist ein Blendenarray mit einer Vielzahl lichtdurchlässiger Bereiche, sogenannten Pinholes, in einer zur Fokusebene des Mikroskopobjektivs konjugierten Ebene auf. Dem Blendenarray ist ein Sensorarray mit einer Vielzahl lichtempfindlicher Elemente nachgeschaltet. Jedem lichtempfindlichen Element ist ein Ladungsspeicher zugeordnet. Außerdem weist das Sensorarry eine Einrichtung zum Verschieben der in den Ladungsspeichern gespeicherten Ladungen von einem Speicher zu einem anderen Speicher auf, wie dieses beispielsweise bei den sogenannten TDI Sensoren der Fall ist. Desweiteren ist eine Synchronisationseinheit vorgesehen, die ein Verschieben der Ladungen entsprechend der Bewegung des Bildpunktes eines Probenpunktes in der Ebene des Sensorarrays bewirkt.

Durch die konfokal-mikroskopische Anordnung wird die für konfokale Mikroskope übliche hohe Auflösung sowohl in Richtung der optischen Achse als auch senkrecht zur optischen Achse erzielt. Die bei Verwendung eines stark vergrößernden Objektivs, beispielsweise einem Objektiv mit 20 bis 120-facher Vergrößerung, erreichbare Auflösung ist für die Halbleiterinspektion ausreichend. Durch die Verwendung eines Blendenarrays und der damit einhergehenden Vielzahl paralleler konfokaler Strahlengänge wird zu jedem Zeitpunkt eine der Anzahl der Pinholes im Blendenarray entsprechende Anzahl an Objektpositionen erfaßt. Durch die Synchronisation der Verschiebung der Ladungen im Sensorarray entsprechend der Bewegung des Bildpunktes eines Objektpunktes erfolgt die Messung während die Probe bewegt wird. Die Bewegung der Probe erfolgt dabei vorzugsweise entlang linearer Bahnen, die sich über die komplette Länge der Probe in Bewegungsrichtung erstrecken. Zur Erfassung großer zweidimensionaler Flächen können entsprechende lineare Bahnen mäanderförmig zusammengesetzt sein. Es ergeben sich dann jeweils am Anfang und am Ende einer jeden linearen Bahn kurze Beschleunigungs- bzw. Verzögerungsstrecken, während deren keine Signalaufnahme erfolgt. Zwischen diesen Beschleunigungs- und Verzögerungsstrecken erfolgt die Bewegung der Probe gleichförmig, damit die Ladungsbewegung zwischen den Speichern des Sensorarrays und der Bewegung des Bildpunktes auf dem Sensorarray zueinander synchronisiert sind.

Für die Realisierung der parallelen konfokalen Strahlengänge ist ein Lichtquellenarray, das eine Vielzahl voneinander beabstandete Lichtquellen aufweist, in einer zur Fokusebene des Objektivs konjugierten Ebene angeordnet. Die Positionen der einzelnen Lichtquellen sind dabei zu den Positionen der lichtdurchlässigen Bereiche des Blendenarrays konjugiert. Entsprechende Lichtquellenarrays sind auf unterschiedliche Weise realisierbar. Die einfachste Variante ergibt sich, indem das Blendenarray in einem gemeinsamen Teil des Beleuchtungsund Beobachtungsstrahlenganges angeordnet ist und das Blendenarray rückwärtig beleuchtet wird. Diese einfache Anordnung hat jedoch den Nachteil, daß ein wesentlicher Anteil des Beleuchtungslichtes an der Rückseite des Blendenarrays reflektiert und dadurch auf dem Sensorarray einen starken Signaluntergrund erzeugt. Ein solcher starker Signaluntergrund läßt sich dadurch vermeiden, daß zwei separate Blendenarrays im Beleuchtungsstrahlengang und im Beobachtungsstrahlengang bzw. Meßstrahlengang vorgesehen sind. Das im Beleuchtungsstrahlengang angeordnete Blendenarray wird dann wiederum rückwärtig beleuchtet. Für eine effektivere Lichtausnutzung kann dem Blendenarray im Beleuchtungsstrahlengang, wie in der eingangs genannten US 5 239 178 beschrieben, ein Linsenarray vorgeschaltet sein. Alternativ zur Verwendung rückwärtig beleuchteter Blendenarrays kann das Lichtquellenarray auch aus einem Laserdiodenarray oder durch die Endflächen arrayförmig angeordneter Lichtleitfasern realisiert sein. Ebenfalls alternativ anstelle eines Linsenarrays kann auch ein entsprechend ausgebildetes diffraktives Element zum Einsatz kommen.

Während des Abscannens der Probe sind das Blendenarray, das Lichtquellenarray und das Sensorarray zueinander in Ruhe. Alle drei Komponenten sind ortsfest zueinander angeordnet.

Das Sensorarray ist vorzugsweise ein zweidimensionales Array lichtempfindlicher Elemente und den lichtempfindlichen Elementen zugeordneter Ladungsspeicher mit einer Vielzahl parallel zueinander angeordneter Spalten. Die Spaltenrichtung ist dabei durch die Richtung definiert, in der die Ladungen zwischen den Ladungsspeichern verschoben werden. Lichtquellenarray und Blendenarray einerseits und Sensorarray andererseits sollten relativ zueinander so angeordnet sein, daß auf jede der parallel zueinander angeordneten Spalten mindestens ein lichtdurchlässiger Bereich des Blendenarrays abgebildet ist.

Als entsprechende Sensorarrays können TDI-Sensoren zum Einsatz kommen. Soweit solche TDI-Sensoren lichtunempfindliche Bereiche zwischen den lichtempfindlichen Flächen aufweisen, können diese so angeordnet und die Abbildung zwischen Blendenarray und Sensor so gewählt sein, daß die lichtdurchlässigen Bereiche des Blendenarrays ausschließlich auf die lichtempfindlichen Bereiche abgebildet werden.

Die lichtdurchlässigen Bereiche des Blendenarrays sind so entsprechend der Bewegungsrichtung des Scanningtisches und dem Abbildungsverhältnis zwischen Objektebene und dem Blendenarray ausgebildet, daß die Bahnen der Bilder aller lichtdurchlässigen Bereiche, unter Beibehaltung der konfokalen Filterung, einen Teil der Fokusebene dicht, vorzugsweise lückenlos ausfüllen. Mit einem linearen, eindimensionalen Abscannen des Objektes wird dadurch die Bildinformation für einen Streifen, dessen Breite der Breite des senkrecht zur eindimensionalen Bewegungsrichtung vom Sensorarray erfaßten Bildausschnittes entspricht, vollständig konfokal erfaßt, ohne daß Mikrobewegungen senkrecht zur Bewegungsrichtung erforderlich sind. Die lichtdurchlässigen Bereiche des Blendenarrays können dazu in Form eines zweidimensionalen rhombischen Gitters angeordnet sein. Der Mittelpunkt eines jeden lichtdurchlässigen Bereiches entspricht dabei der Position des theoretischen Gitterpunktes. Besonders vorteilhaft ist jedoch die Anordnung der lichtdurchlässigen Bereiche des Blendenarrays in Form eines rechtwinkligen Gitters, dessen Gitterachsen gegenüber der linearen Bewegungsrichtung des Scanningtisches verdreht sind. Eine solche rechtwinklige Geometrie liefert Vorteile, wenn das Lichtquellenarray in Form einer Faserbeleuchtung, eines Linsenarrays oder als ein eine entsprechende Beleuchtung erzeugendes diffraktives Element ausgebildet ist.

Ein besonders vorteilhaftes Sensorarray weist vorzugsweise mehrere in Spalten- oder Stagerichtung hintereinander angeordnete, voneinander unabhängige zweidimensionale Teil-Sensorarrays auf, die jeweils senkrecht zur Spalten- bzw. Stagerichtung um einen Abstand Δ = d / n zueinander versetzt sind, wobei d der Abstand der einzelnen Sensoren senkrecht zur Spaltenrichtung und n die Anzahl der zweidimensionalen Teilarrays ist. Eine solche versetzte Anordnung mehrerer zweidimensionaler Sensorarrays weist bei anamorphotischer Abbildung des Blendenarrays auf das Sensorarray gegenüber einer Anordnung eines einzigen Sensorarrays mit gleicher Anzahl lichtempfindlicher Elemente ein um die Anzahl der zweidimensionalen Arrays größeres Bildfeld auf, wodurch sich ein entsprechend größeres Signal/Rauschverhältnis ergibt.

Nachfolgend werden Einzelheiten der Erfindung anhand der in den Figuren dargestellten Ausführungsbeispiele näher erläutert. Dabei zeigen:
- Figur 1a: die Prinzipskizze eines ersten Ausführungsbeispiels der Erfindung mit einem einzigen, im gemeinsamen Teil des Beleuchtungs- und Beobachtungsstrahlenganges angeordneten Pinholearray;
- Figur 1b: ein zweites Ausführungsbeispiel der Erfindung mit separatem Lichtquellen- und Blendenarray;
- Figur 1c: eine Prinzipskizze zur Erläuterung der Synchronisation zwischen Objektbewegung und Ladungsverschiebung im Sensorarray;
- Figur 2a: ein Blockschaltbild der Synchronisation zwischen Bewegung des Scanntisches und der Ladungsverschiebung im Sensorarray;
- Figur 2b: eine Detaildarstellung des Funktionsablaufs im Mikrocontroller aus Figur 2a;
- Figuren 3a - 3c: Ausschnitte aus einem ein rhombisches Gitter bildendes Blendenarray und die zugehörigen Bildpunkte in der Objektebene und in der Ebene des Sensorarrays;
- Figuren 4a - 4c: Ausschnitte aus einem ein rechtwinkliges Gitter bildendes Blendenarray und der zugehörigen Bildpunkte in der Objektebene und in der Ebene des Sensorarrays;
- Figur 5a: eine schematische Darstellung eines Sensorarrays aus mehreren versetzt zueinander angeordneten zweidimensionalen Teil-Sensorarrays und
- Figur 5b: die Prinzipskizze eines für das Sensorarray aus Figur 5a geeigneten Pinholearrays.

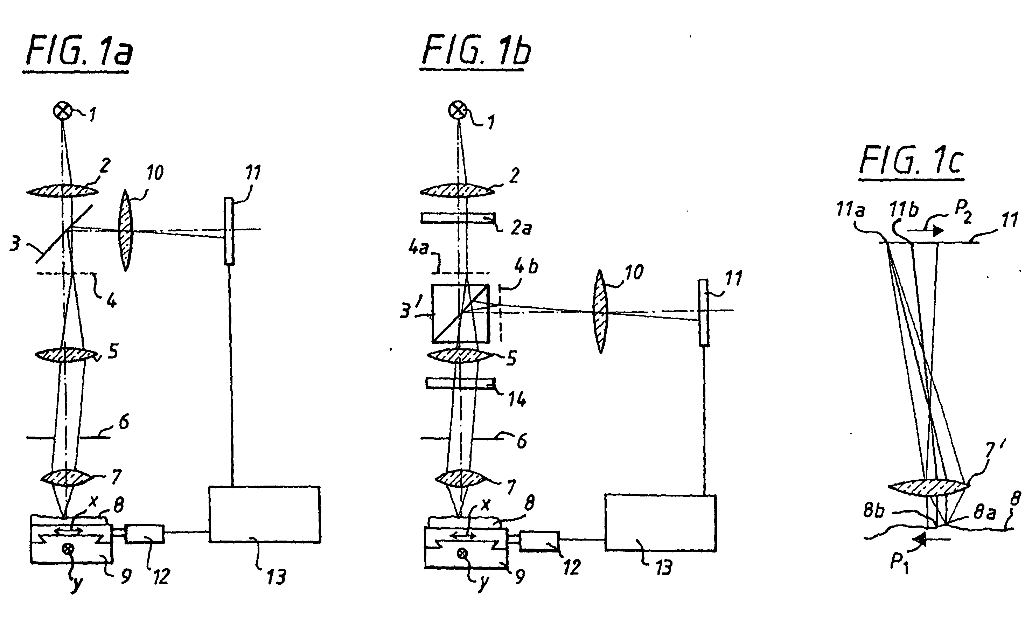

Bei dem in Figur 1a dargestellten Konfokalmikroskop nach der Erfindung ist ein einziges Blendenarray (4) mit einer Vielzahl transparenter Bereiche oder Löcher im gemeinsamen Teil des Beleuchtungs- und Beobachtungsstrahlengang angeordnet. Es bildet dadurch gleichzeitig das Blendenarray für den Detektionsstrahlengang und das Lichtquellenarray für die Beleuchtung des Objektes (8). Das Blendenarray (4) ist dazu über eine Lichtquelle (1) mit einem nachgeschalteten Kondensor (2) von der Rückseite gleichförmig ausgeleuchtet. Jeder transparente Bereich bzw. jedes Pinhole des Blendenarrays (4) bildet dadurch eine Sekundärlichtquelle.

Zur Abbildung des Blendenarrays (4) auf das auf dem motorischen Scanningtisch (9) positionierte Objekt (8) ist dem Blendenarray (4) eine Tubuslinse (5) mit einem Mikroskopobjektiv (7) nachgeordnet. Das Mikroskopobjektiv (7) ist in der Figur 1a stark vereinfacht als Einzellinse dargestellt. Das Mikroskopobjektiv (7) ist auf Schnittweite unendlich, also auf einen unendlichen Bildabstand korrigiert. Dieser Sachverhalt ist in der Figur 1a durch die Telezentrierblende (6) angedeutet.

Das Blendenarray (4), und damit auch das durch das Blendenarray (4) gebildete Lichtquellenarray ist über die Tubuslinse (5) und die telezentrische Abbildung konfokal zur Fokusebene des Objektivs (7) angeordnet. In der Fokusebene des Objektivs (7) entsteht dadurch ein Beleuchtungsmuster, das dem Abbild des Blendenarrays (4) entspricht. Das Objekt (8) wird dadurch an den zu den transparenten Bereichen des Blendenarrays (4) konjugierten Stellen beleuchtet. Das am Objekt (8) gestreute oder reflektierte Licht wird vom Objektiv (7) mit der nachgeschalteten Tubuslinse (5) rückwärtig wieder auf das Blendenarray (4) abgebildet. Bei dieser rückwärtigen Abbildung bewirkt das Blendenarray (4) die konfokale Filterung mit der Folge, daß nur solches Licht durch die transparenten Bereiche des Blendenarrays (4) transmittieren kann, das in zu den transparenten Bereichen des Blendenarrays (4) konfokalen Bereichen vom Objekt (8) gestreut oder reflektiert wurde. Das oberhalb oder unterhalb der Fokusebene des Objektivs (7) am Objekt (8) gestreute oder reflektierte Licht wird dagegen von den lichtundurchlässigen Bereichen des Blendenarrays (4) abgefangen. Dadurch resultiert die hohe Auflösung des Konfokalmikroskops in Richtung der strichpunktiert angedeuteten optischen Achse (z-Richtung).

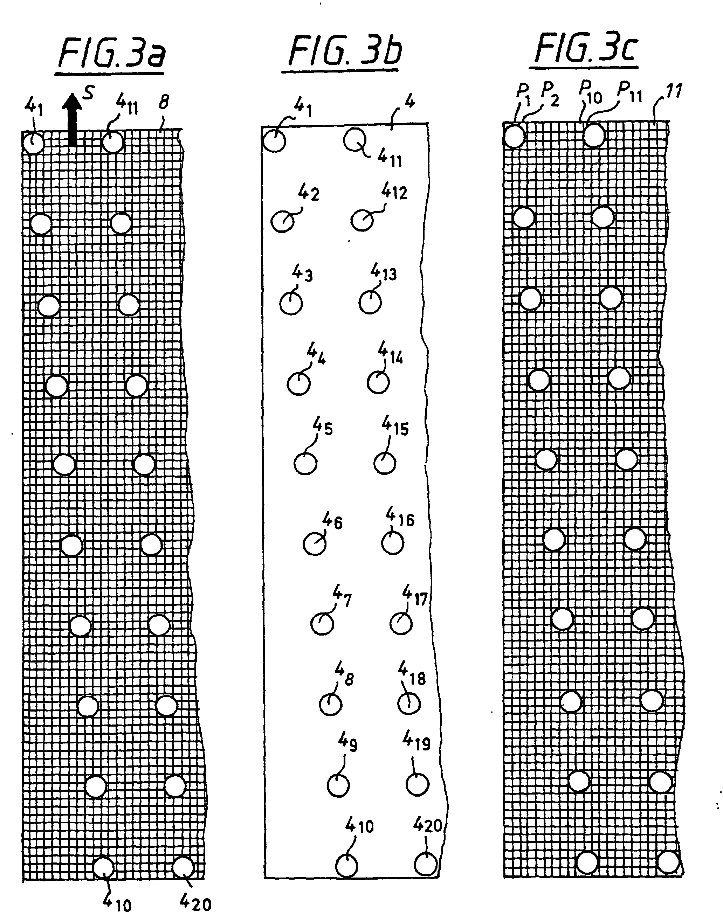

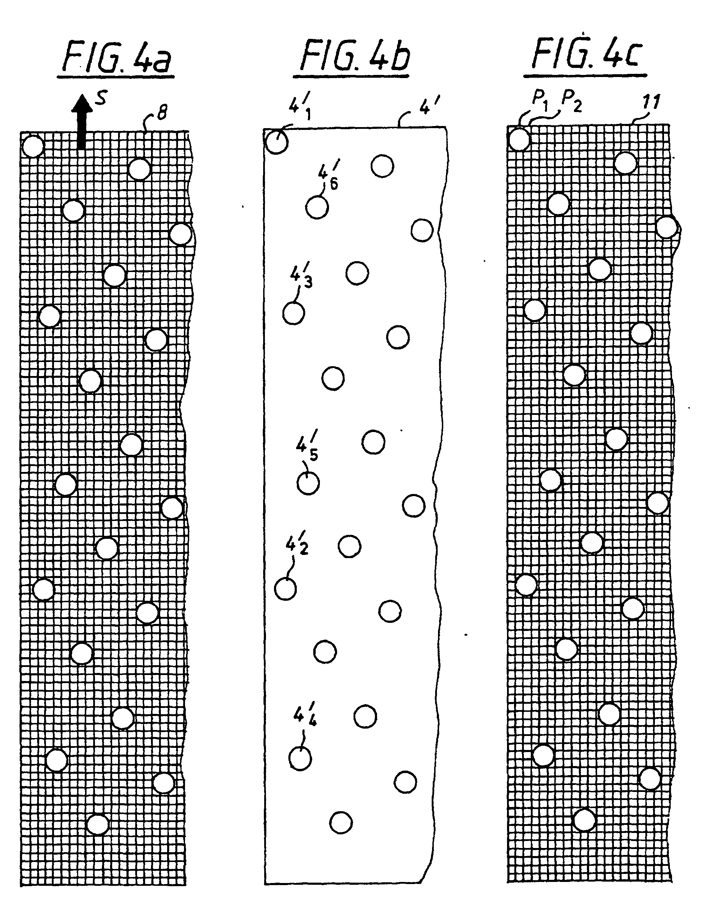

Zur Trennung von Beleuchtungs- und Beobachtungsstrahlengang ist zwischen dem Blendenarray (4) und dem Kondensor (2) ein Teilerspiegel (3) angeordnet, durch den ein Teil des am Objekt (8) gestreuten oder reflektierten und durch das Blendenarray (4) transmittierten Lichtes in Richtung auf das Sensorarray (11) ausgespiegelt wird. In dem ausgespiegelten Strahlengang, d.h. zwischen Teilerspiegel (3) und Sensorarray (11), ist eine weitere Abbildungsoptik (10) vorgesehen, durch die das Blendenarray (4) auf das Sensorarray (11) abgebildet ist. Beim Sensorarray (11) handelt es sich um einen sogenannten TDI Sensor (Time Delay and Integration), wie dieser beispielsweise von der Firma DALSA Inc., Ontario, Canada, unter der Bezeichnung IT-E1 oder IT-F2 angeboten wird. Ein solcher TDI Sensor weist 2048 Spalten mit jeweils 96 TDI Stages (Zeilen) auf. Jeder TDI Stage in jeder Spalte ist ein lichtempfindlicher Bereich und ein Ladungsspeicher zugeordnet, so daß die Anzahl der Pixel (lichtempfindlichen Bereiche) und der Ladungsspeicher 96 x 2048 beträgt. Das Blendenarray (4) weist mindestens eine der Spaltenzahl des TDI Sensors entsprechende Anzahl an transparenten Bereichen auf, so daß auf jede Spalte des TDI Sensors mindestens ein transparenter Bereich des Blendenarrays (4) abgebildet ist. Die detaillierte abbildungsmäßige Zuordnung der Pixel des TDI Sensors und der transparenten Bereiche wird weiter unten noch anhand der Figuren 3a - 3c und 4a - 4c näher erläutert.

Zum Erfassen großer Objektbereiche dient der in zwei zur optischen Achse senkrechten Richtungen motorisch bewegbare Scanningtisch (9) dessen Bewegung über zwei Positionsmeßsysteme (12) erfaßt wird. Entsprechend der Bewegung des Scanningtisches (9) werden über eine Synchronisationseinheit (13) die in den Ladungsspeichern des TDI Sensors (11) aufsummierten Ladungen in Stagerichtung verschoben. Die Bewegung des Scanningtisches (9) erfolgt dazu entlang, gegebenenfalls mehrerer, linearer Bewegungsbahnen derart, daß sich der zu einem Objektpunkt zugehörige Bildpunkt auf dem TDI Sensor (11) entlang der Spalten verschiebt. Dieser Sachverhalt wird anhand der vereinfachten Darstellung der Figur 1c erläutert. Angenommen zu einem ersten Zeitpunkt werde ein Objektpunkt (8a) auf einen Bildpunkt (11a) auf dem TDI Sensor (11) abgebildet. Aufgrund der Bewegung des Scanningtisches (9) erfolgt eine Bewegung des Objektes (8) in Richtung des Pfeiles (P1) und zu einem etwas späteren Zeitpunkt sei der Objektpunkt (8a) zur Position (8b) gewandert. Simultan zur Bewegung des Objektes (8) erfolgt eine Verschiebung der in den Ladungsspeichern des TDI Sensors (11) abgespeicherten Ladungen in Richtung des Pfeiles (P2) von der Stage (11a) zur Stage (11b). Durch diese Synchronisation zwischen Bewegung des Objektes (8) und der Bewegung der Ladungen kann die Messung während der Bewegung des Objektes (8) fortgesetzt werden. Die Bewegung des Objektes (8) erfolgt daher nicht im Start-/Stoppbetrieb sondern gleichförmig während der Messung. Dadurch werden gegenüber Anordnungen, bei denen die Objektbewegung im Start-/Stoppbetrieb erfolgt und jeweils bei Stillstand des Objektes eine Messung erfolgt, bei gleichen Signal/Rauschverhältnissen wesentlich kürzere Meßzeiten erzielt.

Das komplette Abscannen des Objektfeldes senkrecht zur Bewegungsrichtung des Scanningtisches (9) erfolgt durch eine senkrecht zur Bewegungsrichtung versetzte Anordnung der transparenten Bereiche. In Verbindung mit der Synchronisation der Ladungsverschiebung im Sensorarray entsprechend der Bewegung des Bildpunktes eines Objektpunktes wird das gesamte Objektfeld, das der Zeilenbreite des Sensorarrays entspricht, erfaßt. Durch die versetzte Anordnung der Blenden im Blendenarray liegen die Bahnen der Bildpunkte der Blenden in der Fokusebene des Objektivs (7) lückenlos dicht nebeneinander. Deshalb sind keine Mikroverschiebungen senkrecht zur Bewegungsrichtung zur vollständigen Erfassung des Bildfeldes erforderlich. Dieses reduziert den Aufwand bei der Datenspeicherung (Datensortierung) und die Toleranzanforderungen an die Bewegung des Scanningtisches.

Beim Ausführungsbeispiel nach Figur ib sind die den einzelnen Komponenten des Ausführungsbeispiels nach Figur 1a entsprechenden Komponenten mit den selben Bezugszeichen wie in Figur 1a bezeichnet. Die Unterschiede zum Ausführungsbeispiel nach Figur 1a bestehen darin, daß in der Figur 1b das Blendenarray (4b) dem Strahlteiler (3') nachgeschaltet im Beobachtungs- oder Detektionsstrahlengang angeordnet ist. Im Beleuchtungsstrahlengang ist ein eigenes Blendenarray (4a) angeordnet, daß das Lichtquellenarray bildet. Die beiden Blendenarrays (4a) und (4b) sind zueinander und zur Fokusebene des Objektivs (7) konjugiert angeordnet. Auch die transparenten Bereiche der beiden Blendenarrays (4a) und (4b) sind zueinander konjugiert. Durch den Einsatz getrennter Blendenarrays (4a, 4b) im Beleuchtungs- und Beobachtungsstrahlengang wird vermieden, daß der relativ große Anteil am Blendenarray (4a) des Beleuchtungsstrahlenganges reflektierten Lichts einen großen Signaluntergrund auf dem TDI Sensor (11) erzeugt.

Zusätzlich ist beim Ausführungsbeispiel nach Figur 1b der Strahlteiler (3') als Polarisationsstrahlteiler ausgebildet und die Beleuchtung des Blendenarrays (4a) im Beleuchtungsstrahlengang erfolgt ebenfalls mit polarisiertem Licht, was durch einen dem Blendenarray (4a) vorgeschalteten Polarisator (2a) angedeutet ist. Zusätzlich ist objektseitig des Strahlteilers (3') eine Lambdaviertelplatte (14) vorgesehen, die in bekannter Weise bewirkt, daß die Polarisation des Lichtes, das zweimal durch die Lambdaviertelplatte (14) transmittiert, um 90° in der Polarisation gedreht wird. Bei Verwendung polarisierten Lichtes resultiert durch den Einsatz eines Polarisationsstrahlteilers (3') und einer Lambdaviertelplatte (14) eine um den Faktor vier bessere Ausnutzung des hinter dem Kondensor (2) vorhandenen Lichtes gegenüber dem Ausführungsbeispiel nach Figur 1a. Eine entsprechende Anordnung von Polarisationsstrahlteiler, Polarisationsfilter und Lambdaviertelplatte ist jedoch auch beim Ausführungsbeispiel mit nur einem Blendenarray nach Figur 1a möglich.

In der Figur 3b ist ein erstes Ausführungsbeispiel für ein Blendenarray (4, 4a, 4b) dargestellt. Das Blendenarray (4) enthält eine der Pixelzahl des Sensors (11) entsprechende Anzahl lichtdurchlässiger Bereiche (4₁ - 4₂₀), von denen in der Figur 3b aus Gründen der Übersichtlichkeit nur 20 dargestellt sind. Der Durchmesser jedes transparenten Bereiches (4₁ - 4₂₀) entspricht etwa dem halben Durchmesser des Airyscheibchens und beträgt bei einem Objektiv mit einer numerischen Appertur NA = 0.95 und für eine Wellenlänge Lambda = 365 nm etwa 0,25 µm multipliziert mit dem Abbildungsmaßstab zwischen dem Objekt (8) und dem Blendenarray (4, 4a, 4b). Um eine möglichst gute konfokale Filterung zu erzielen, beträgt der Abstand nächstbenachbarter transparenter Bereiche mindestens das 4-fache des Durchmessers der transparenten Bereiche. Die transparenten Bereiche (4₁ - 4₂₀) bilden ein zweidimensionales rhombisches Gitters wobei der Winkel zwischen den beiden Gitterachsen so gewählt ist, daß unter Berücksichtigung des Abbildungsverhältnisses zwischen dem Blendenarray (4, 4b) und dem TDI Sensor (11) das Zentrum jeweils nächst benachbarter transparenter Bereiche auf benachbarte Spalten des TDI Sensors (11) abgebildet wird. Diese abbildungsmäßige Zuordnung ist in der Figur 3c dargestellt. Jedes Quadrat in der Figur 3c stellt einen lichtempfindlichen Bereich dar. In vertikaler Richtung sind die 96 Stages und in horizontaler Richtung ein Ausschnitt aus den 2048 Spalten dargestellt, wobei die Spalten mit (P1-P4, P10, P11) bezeichnet sind. Wie der Zusammenschau der Figuren 3b und 3c entnehmbar ist, ist der transparente Bereich (4₁) auf die Spalte (P1), der transparente Bereich (4₂) auf die Spalte (P2) usw. auf unterschiedliche Spalten des TDI Sensors (11) abgebildet. Gleichzeitig sind die transparenten Bereiche (4₁- 4₁₀) auf unterschiedliche Stages abgebildet. Erst die Stageposition, auf die der transparente Bereiche (4₁₁) abgebildet ist, entspricht wieder der Stageposition des Bereichs (4₁).

Das Abbild des Blendenarrays (4) und des TDI Sensors (11) in der Fokusebene des Objektivs (7) und damit in einer Schnittebene des Objektes (8) ist in der Figur 3a dargestellt. Die Bilder der lichtdurchlässigen Bereiche des Blendenarrays (4) sind dort mit den selben Bezugszeichen wie in der Figur 3b bezeichnet. Jedes dort eingezeichnete Quadrat stellt das Bild des zugehörigen lichtempfindlichen Bereiches des TDI Sensors (11) dar. Die lineare Bewegungsrichtung des Scanningtisches (9) der längeren Mäanderbahnen ist durch den Pfeil (S) angegeben.

Im Prinzip der selbe Sachverhalt wie in den Figuren 3a - 3c ist in den Figuren 4a - 4c für ein alternatives Blendenarray (4') (siehe Figur 4b) dargestellt. Bei dieser alternativen Ausführungsform für das Blendenarray (4') sind die transparenten Bereiche, die bezüglich ihres Durchmessers und ihres Abstandes zum benachbarten transparenten Bereich denen aus Figur 3b entsprechen, derart angeordnet, daß sich ein rechtwinkliges zweidimensionales Gitter an transparenten Bereichen ergibt. Die Gitterachsen des rechtwinkligen Gitters sind gegenüber der Scanningrichtung (Pfeil (S)) so verdreht, daß auch hier, wie bei dem zuvor beschriebenen Ausführungsbeispiel nach den Figuren 3a - 3c, jeweils ein transparenter Bereich (4₁, - 4₆,) auf jeweils eine Spalte des TDI Sensors (11) abgebildet. In der Figur 4a ist wiederum das Abbild des Blendenarrays (4') und des TDI Sensors (11) in der Fokusebene des Objektivs (7) dargestellt.

Eine solche Anordnung der transparenten Bereiche als rechtwinkliges Gitter liefert konstruktive Vorteile, wenn für eine Erhöhung der Lichtausbeute das Lichtquellenarray (4a) nicht lediglich durch ein rückwärtig homogen beleuchtetes Blendenarray sondern durch ein Blendenarray mit einem vorgeschalteten Linsenarray, einem diffraktiven Element oder einem vorgeschalteten Faserarray zur besseren Ausleuchtung der transparenten Bereiche des Blendenarrays (4a) ausgebildet ist. Bei ausreichender Punktförmigkeit der resultierenden Sekundärlichtquellen kann auf ein Beleuchtungsblendenarray (4a) auch verzichtet werden.

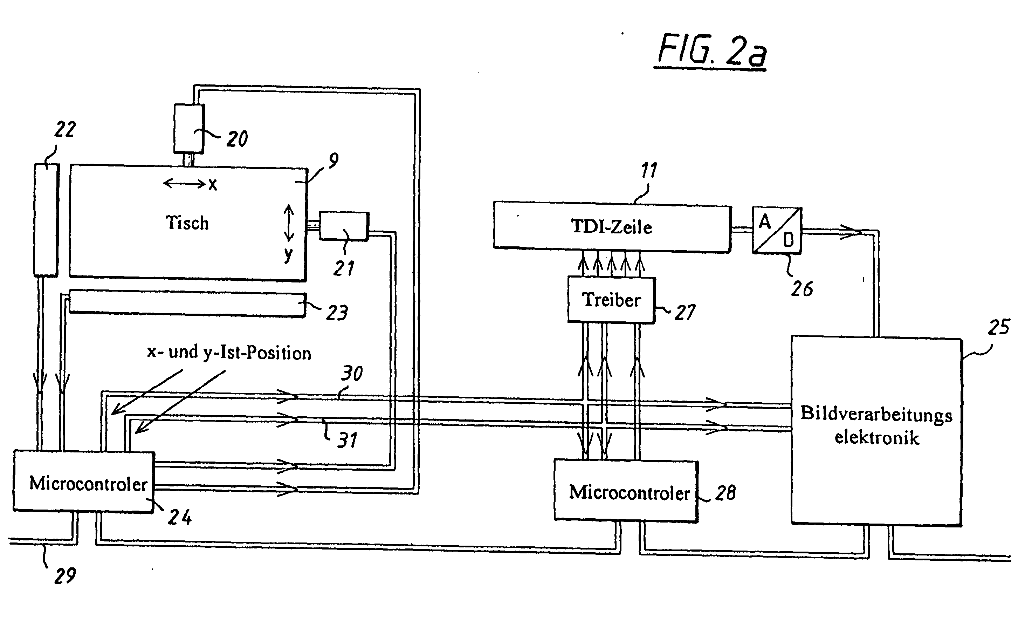

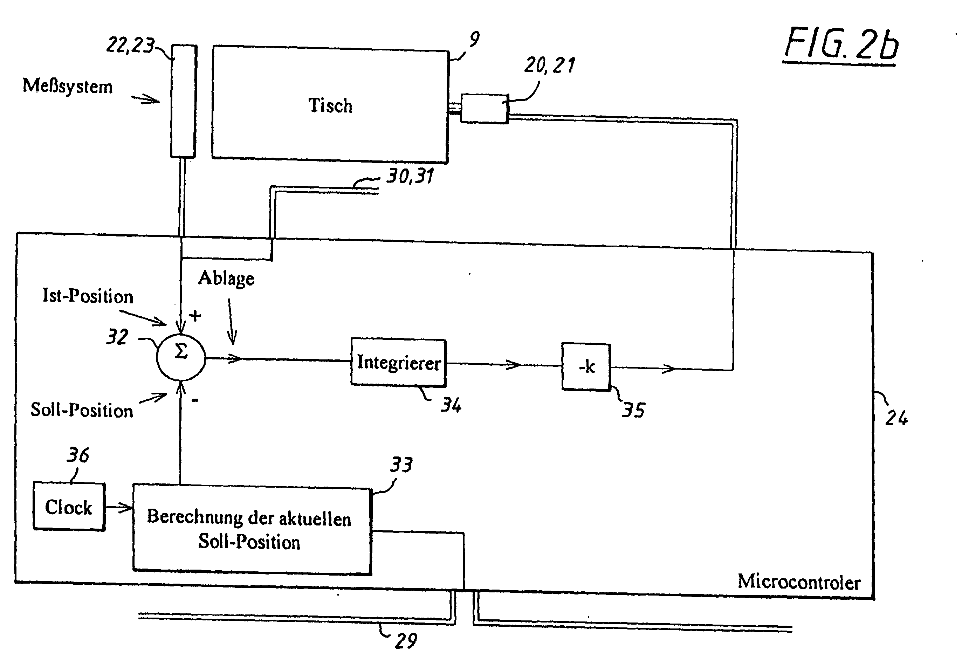

Die für die Steuerung der Objektbewegung und die gleichzeitige Synchronisation der Ladungsverschiebung erforderliche Elektronik wird nachfolgend anhand der Blockschaltbilder in den Figuren 2a und 2b erläutert.

Der Objekttisch (9) besteht im wesentlichen aus den in zwei zueinander senkrechten Richtungen verschiebbaren Tischelementen, den motorischen Antrieben (20, 21), den Positionsmeßsystemen (22, 23) und einem Mikrocontroller (24). Der Objekttisch (9) selbst ist für eine Fokussierung in Richtung der optischen Achse verschiebbar an einem nicht dargestellten Stativ aufgenommen. Die beiden motorischen Antriebe (20, 21) zur Erzeugung der Bewegung in zwei orthogonalen Richtungen sind vorzugsweise als Linearantriebe ausgebildet. Die Positionsmeßantriebe (22, 23), die die Bewegung oder Auslenkung des Tisches (9) unabhängig voneinander in den beiden zueinander senkrechten Richtungen erfassen, sind als Längenmeßinterferometer ausgebildet. Diese Interferometer liefern bei einer Bewegung des Tisches in Richtung des Meßstrahlenganges des zugehörigen Interferometers auf einem Strahlungssensor eine Bestrahlungsstärke, die eine sinusförmige Abhängigkeit vom zurückgelegten Weg hat. Dabei ist eine Periode über die Wellenlänge des verwendeten Meßlichtes im zugehörigen Interferometer direkt mit der zurückgelegten Entfernung verbunden. Da das Meßsignal bei längeren zurückgelegten Wegstrecken Mehrdeutigkeiten aufweist, ist zusätzlich eine Absolutkalibrierung erforderlich, indem zu Beginn einer Messung eine Nullposition angefahren wird. Zu jedem späteren Zeitpunkt ergibt sich dann die aktuelle Position in Bezug auf diese Nullposition aus der Anzahl der erfolgten Nulldurchgänge des Interferometersignals zuzüglich der Phasendifferenz des detektierten Sinussignals in der Kalibrierposition und der aktuellen Position.

Der Mikrocontroller (24) steuert die Antriebe (20, 21) des Objekttisches (9) entsprechend der aktuellen Positionsmeßwerte, die von den Meßsystemen (22, 23) geliefert werden und den von einem nicht dargestellten Host-Rechner über eine Busleitung (29) bestimmten Sollpositionswerten. Der dafür erforderliche Regelkreis innerhalb des Mikrocontrollers (24) ist in der Figur 2b vergrößert dargestellt. Die über den Steuerungsbus, beispielsweise einem Can-Bus, gelieferten Daten werden in einer arithmetisch logischen Einheit (ALU) (33) in die aktuellen Sollpositionswerte umgerechnet. In einer darauffolgenden weiteren ALU (32) werden die in der ALU (33) ermittelten Werte von den von den beiden Meßsystemen (22, 23) gelieferten Werten jeweils subtrahiert, so daß die Differenz die Ablage zwischen Istposition und Sollposition darstellt. Diese Differenz wird in einem Integrierer (34) zeitlich integriert und nachfolgend in einer Einheit (35) mit einem Faktor multipliziert, der die Verstärkung des offenen Regelkreises angibt. Dieser Faktor ist in der Regel negativ, um eine Phasenverschiebung von 180° zu bewirken. Dieses verstärkte und zeitlich integrierte Differenzsignal stellt dann das Antriebssignal für die Antriebe (20, 21) dar.

Die Werte der aktuellen Sollpositionen in den beiden zueinander senkrechten Richtungen werden von der ALU (33) gleichzeitig über Datenleitungen (30, 31) an einen weiteren Mikrocontroller (28), einen Treiber (27) für das Auslesen bzw. das Takten des TDI Sensors (11) und eine Bildverarbeitungselektronik (25) weitergegeben. Der über den Mikrocontroller (24) angetriebene Treiber (27) bewirkt eine Verschiebung der im TDI Sensor aufgespeicherten Ladungen entsprechend der Wanderung eines jeden Bildpunktes auf dem TDI Sensor (11). Die vom TDI Sensor (11) ausgelesenen Ladungsdaten werden von einem AD-Wandler (26) digitalisiert und nachfolgend ebenfalls an die Bildverarbeitungselektronik (25) weitergegeben. Die Bildverarbeitungselektronik (25) erhält auf diese Weise die Information, für welche Tischposition die mit dem TDI Sensor aufgezeichneten Bestrahlungstärken in das zu erzeugende Bild eingetragen werden sollen. Dabei berücksichtigt die Elektronik die Verzögerungen, die durch die systematischen Eigenschaften des TDI Sensors verursacht werden. Falls der Tisch sich an einer Position befindet, die außerhalb des durch die Aufnahme zu erfassenden Bereiches liegt, bleiben die vom TDI Sensor abgegebenen Werte unberücksichtigt.

Von der Bildverarbeitungselektronik wird zuerst eine Restauration der Aufnahme durchgeführt. Dabei werden konstante und lineare Fehler kompensiert, die beispielsweise durch Veränderungen der Strahlungsintensität, durch Abweichungen der Dimensionen der lichtdurchlässigen Bereiche innerhalb des Blendenarrays, Abweichungen der Tischgeschwindigkeit von der Sollgeschwindigkeit oder durch unterschiedliche Empfindlichkeitscharakteristiken der Pixel des TDI Sensors entstehen können. Nachdem solche konstanten oder linearen Fehler kompensiert sind, können durch geeignete Filterung die Strukturen des Objektes, beispielsweise des belichteten Wafers ein wenig unterdrückt werden, um Fehler zwischen den Dies besser ermitteln zu können.

Um einen sogenannten Die zu Die-Vergleich durchführen zu können, werden die Teile der Aufnahme, die miteinander verglichen werden sollen, unter Berücksichtigung von Fehlern im Tischsystem pixelgenau miteinander zur Deckung gebracht. Anschließend werden die zu vergleichenden Teile der Aufnahme voneinander subtrahiert, der Die zu Die Vergleich durchgeführt und durch abschließende Schwellwertbildung Defekte, wie z.B. aufliegende Partikel, erkannt.

Bei dem oben anhand der Figuren 2a und 2b beschriebenen Regelkreis wird die nominal gewünschte Geschwindigkeit und der Kurs des Tisches vom Host-Rechner vorgegeben. Der Mikrocontroller berechnet aus der Geschwindigkeitsvorgabe mit Hilfe der im Mikrocontroller (24 ) eingebauten Clock (36) die Sollposition des Tisches und den Takt, nach dem sowohl der Tisch geregelt als auch der Treiber (27) für den TDI Sensor und die Bildverarbeitungselektronik getaktet wird. Alternativ dazu kann das Auslesen des TDI Sensors und die Bildverarbeitungselektronik auch direkt vom Host getaktet sein. In diesem Fall werden nicht die Sollpositionen über die Datenleitungen (30, 31) sondern die momentanen Istpositionen an die Bildverarbeitungselektronik (25) weitergegeben.

Die Bildaufnahme eines großen Objektfeldes erfolgt vorzugsweise durch eine mäanderförmige Bewegung des Objekttisches, bei der die längere Bewegungsbahn so orientiert ist, daß die Bildpunkte in Richtung der 96 Stages des TDI Sensors wandern. Über den aufzunehmenden Bildbereich erfolgt die Bewegung dabei mit einer konstanten Geschwindigkeit. Nachdem das Objekt in einer Richtung abgescannt wurde, erfolgt eine Verschiebung des Tisches in der dazu senkrechten Richtung derart, daß nunmehr beim Scannen der nächsten längeren Mäanderbahn die benachbarten Objektbereiche auf den TDI Sensor abgebildet sind. Nun erfolgt das Abscannen in entgegengesetzter Richtung, wobei gleichzeitig die Richtung des Ladungstransportes zwischen den Speichern des TDI Sensors umgekehrt wird. Dazu ist es allerdings erforderlich, daß der TDI Sensor bidirektionale Scanningeigenschaften aufweist, also die Ladungen in die beiden entgegengesetzten Richtungen verschiebbar sind. Der Sensor kann dazu beispielsweise einer vom IT-F2-Typ der DALSA Inc. sein.

Die vom Host-Rechner oder von der Clock (36) des Mikrocontrollers (24) vorgegebene Frequenz ist so bestimmt, daß der Objekttisch mit der maximal möglichen Geschwindigkeit bewegt wird, die für ein Auslesen der TDI Zeile mit der maximalen Frequenz unter Berücksichtigung des Abbildungsmaßstabes und der Bildwanderung möglich ist.

Um eine Änderung des Abbildungsmaßstabs zu erzielen, ist ein Wechsel des Objektivs (7) erforderlich. Dies erfolgt vorzugsweise mittels eines codierten Objektivrevolvers, wobei die Maßstabsdaten der zu den Revolverpositionen zugehörigen Objektive in einem Speicher abgelegt sind. Bei einer Revolverschaltung kann dann gleich eine Anpassung der zueinander synchronisierten Geschwindigkeit zwischen dem Auslesen des TDI Sensors und dem Objekttisch erfolgen.

In der Regel wird eine Änderung des Abbildungsmaßstabes mit einer Änderung des Blendenarrays einhergehen, damit der Durchmesser der transparenten Bereiche an die von der numerischen Appertur des Objektivs abhängigen Größe des Airyscheibchens angepaßt bleibt.

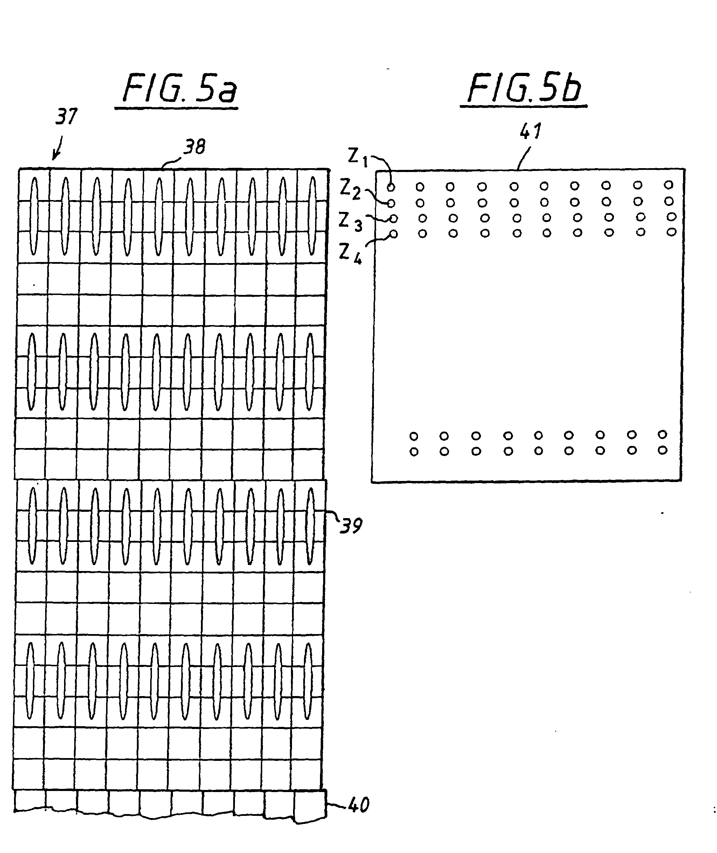

In der Figur 5a ist eine besonders vorteilhafte Anordnung für einen TDI Sensor in Verbindung mit der vorliegenden Erfindung dargestellt. Der TDI Sensor (37) besteht aus mehreren in Stagerichtung hintereinander angeordneten Teilsensoren (38, 39, 40), die jeweils in Pixelrichtung (Horizontale in Figur 5a) um den Abstand Δ = d / n zueinander versetzt sind, wobei d der Pixelabstand und n die Anzahl der Teilsensoren ist. Zusammen mit einer anamorphotischen Abbildung des Blendenarrays (41) (Figur 5b) auf den zusammengesetzten TDI Sensor resultiert bei identischer Gesamtfläche des TDI Sensors eine der Anzahl der hintereinander geschalteten Teilsensoren (38, 39, 40) entsprechende Verbesserung des Signal/Rauschverhältnisses. Bei dem in der Figur 5a dargestellten Ausführungsbeispiel ist davon ausgegangen, daß insgesamt 9 Teilsensoren (38, 39, 40) mit jeweils wieder 96 Stages hintereinander angeordnet sind. Die Stagerichtung entspricht hierbei wieder der Bewegung des Objektpunktes beim Scannen des Objektes. Die Abbildung des Blendenarrays (41) erfolgt dann mit einem 9-fach größeren Abbildungsmaßstab in der Scannrichtung als in der dazu senkrechten Richtung. Durch diese anamorphotische Abbildung werden dann die in den beiden ersten Zeilen (Z₁, Z₂) des Blendenarrays (41) liegenden transparenten Bereiche auf den ersten Teilsensor (38), die beiden darauffolgenden Zeilen (Z₃, Z₄) auf den zweiten Teilsensor (39) usw. abgebildet. Diese anamorphotische Abbildung ist in der Figur 5a durch die ovalen Abbilder der kreisförmigen lichtdurchlässigen Bereiche des Blendenarrays (41) angedeutet. Durch die versetzte Anordnung mehrerer Teilsensoren ist es zum einen möglich, die auf jeden Teilsensor abgebildeten transparenten Bereiche als rechtwinklige, parallel zu den Zeilen und Spalten der Teilsensoren ausgerichtete Teilgitter auszubilden. Gleichzeitig sind die Teilgitter untereinander entsprechend dem Versatz der Teilsensoren zueinander versetzt, so daß das gesamte Bildf eld lückenlos erfaßt wird, wenn die Bilddaten der Teil-TDIs für den Erhalt der korrekten Reihenfolge entsprechend sortiert werden. Dadurch können mehrere transparente Bereiche auf eine Spalte jedes Teilsensors an unterschiedlichen Stagepositionen abgebildet sein, wodurch die Verbesserung des Signal/Rauschverhältnisses resultiert. In der Darstellung nach Figuren 5a und 5b sind zwei transparente Bereiche auf jede Pixelposition an entsprechend versetzten Stagepositionen des selben Teilsensors (38) abgebildet. Die Verwendung von nur zwei transparenten Bereichen pro Pixelposition dient jedoch nur zur Veranschaulichung. Um bei vorgegebenem Verhältnis von Durchmesser der transparenten Bereiche zu Abstand der transparenten Bereiche die Fläche des Sensors (37) optimal auszunutzen, kann die Anzahl der transparenten Bereiche pro Pixelposition entsprechend der Anzahl der Teilsensoren (38, 39, 40) gewählt sein, wodurch dann bei 9 Teilsensoren eine um einen Faktor 9 größere Lichtmenge pro Pixel gegenüber den Ausführungsbeispielen nach den Figuren 3a - 3c und 4a - 4c resultiert, so daß bei gleichem Signal/Rauschverhältnis das Abscannen des Objektes mit der 9-fachen Geschwindigkeit erfolgen kann.

Durch die anamorphotische Abbildung tragen alle Spalten aller Teilsensoren zur Bilderzeugung bei. Ein Sensorarray aus mehreren versetzt angeordneten Teilsensoren kann auch in Verbindung mit einer normalen, nicht-anamorphotischen Abbildung des Blendenarrays auf das Sensorarray zum Einsatz kommen; in diesem Fall tragen jedoch nur ein Teil der Spalten der Teilsensoren zur Bildentstehung bei.

Anstelle von TDIs als Teilsensoren ist auch eine Anordnung einer entsprechenden Anzahl von zueinander versetzt angeordneten Zeilensensoren denkbar. Bezüglich der Lichtempfindlichkeit ist eine solche Anordnung mit den Ausführungsbeispielen nach den Figuren 3a bis 3c vergleichbar, allerdings ist die eingesetzte Sensorfläche demgegenüber deutlicht reduziert.

## Patentansprüche

1. Konfokales Mikroskop mit
- einem motorischen Scanningtisch (9) zum Bewegen eines Objektes (8) senkrecht zur optischen Achse des Mikroskopes,
- einem Blendenarray (4, 4a, 4b) in einer zur Fokusebene des Mikroskopobjektivs (7) konjugierten Ebene,
- einem dem Blendenarray (4, 4b) nachgeordneten Sensorarray (11) mit einer Vielzahl lichtempfindlicher Elemente, den lichtempfindlichen Elementen zugeordneten Ladungsspeichern und einer Einrichtung zum Verschieben der in den Ladungsspeichern gespeicherten Ladungen von einem Speicher zu einem anderen Speicher, und
- einer Synchronisationseinheit (13, 24), die ein Verschieben der Ladungen entsprechend der Bewegung des Bildpunktes eines Objektpunktes in der Ebene des Sensorarrays (11) bewirkt.

2. Konfokales Mikroskop nach Anspruch 1, wobei die Bewegung der Probe entlang linearer Bahnen erfolgt.

3. Konfokales Mikroskop nach Anspruch 1 oder 2, wobei das Blendenarray (4, 4a, 4b) beim Bewegen der Probe relativ zum Strahlengang fest bleibt.

4. Konfokales Mikroskop nach Anspruch 3, wobei das Blendenarray (4, 4b) derart ausgebildet ist, daß die Bahnen der Bilder der transparenten Bereiche (4₁ - 4₂₀) in der Fokusebene des Objektivs (7) einen Teil der Fokusebene lückenlos ausfüllen.

5. Konfokales Mikroskop nach einem der Ansprüche 1 - 4, wobei ein Lichtquellenarray (4, 4a) zur Erzeugung einer Vielzahl voneinander beabstandeter Lichtquellen in einer zur Fokusebene des Objektivs (7) konjugierten Ebene angeordnet ist und wobei die Positionen der Lichtquellen zu den Positionen der lichtdurchlässigen Bereiche (4₁ -4₂₀) des Blendenarrays (4, 4b) konjugiert sind.

6. Konfokales Mikroskop nach einem der Ansprüche 1 - 5, wobei das Detektorarray (11) eine Vielzahl parallel zueinander angeordneter linearer Sensorspalten aufweist und die Verschiebung der Ladungen in Richtung der Spalten erfolgt.

7. Konfokales Mikroskop nach Anspruch 6, wobei das Blendenarray eine Vielzahl lichtdurchlässiger Bereiche (4₁ - 4₂₀) aufweist und wobei auf jede Spalte des Sensorarrays mindestens ein lichtdurchlässiger Bereich (4₁ - 4₂₀) des Blendenarrays (4, 4b) abgebildet ist.

8. Konfokales Mikroskop nach Anspruch 7, wobei die lichtdurchlässigen Bereiche des Blendenarrays (4, 4a, 4b) ein zweidimensionales rhombisches Gitter bilden.

9. Konfokales Mikroskop nach Anspruch 7, wobei die lichtdurchlässigen Bereiche des Blendenarrays (4, 4a, 4b) ein rechtwinkliges zweidimensionales Gitter bilden.

10. Konfokales Mikroskop nach einem der Ansprüche 1-9, wobei das Blendenarray(4, 4b) auf das Sensorarray (11) abgebildet ist.

11. Konfokales Mikroskop nach einem der Ansprüche 6 - 10, wobei das Sensorarray (37) mehrere in Spaltenrichtung hintereinander angeordnete, voneinander unabhängige, Teil-Sensorarrays (38, 39, 40) aufweist, die in Zeilenrichtung um einen Betrag zueinander versetzt angeordnet sind, wobei für den Betrag der Versetzung gilt Δ = d / n, und wobei d die Abmessung der Einzelsensoren in Zeilenrichtung und n die Anzahl der Teil-Sensorarrays ist.

12. Konfokales Mikroskop nach Anspruch 11, wobei das Blendenarray (41) anamorphotisch auf das Sensorarray (37) abgebildet ist.

## Claims

1. Confocal microscope, having
- a motorized scanning table (9) for moving an object (8) perpendicular to the optical axis of the microscope,
- a diaphragm array (4, 41, 4b) in a plane conjugate to the focal plane of the microscope objective (7),
- a sensor array (11), downstream of the diaphragm array (4, 4b), with a multiplicity of light-sensitive elements, charged stores assigned to the light-sensitive elements, and a device for displacing the charges, stored in the charge stores, from one store to another store, and
- a synchronization unit (13, 24) which effect a displacement of the charges in accordance with the movement of the pixel of an object point in the plane of the sensor array (11).

2. Confocal microscope according to Claim 1, in which the movement of the specimen is performed along linear paths.

3. Confocal microscope according to Claim 1 or 2, in which the diaphragm array (4, 4a, 4b) remains fixed relative to the beam path during movement of the specimen.

4. Confocal microscope according to Claim 3, in which the diaphragm array (4, 4b) is designed in such a way that the paths of the images of the transparent regions (4₁ - 4₂₀) in the focal plane of the objective (7) fill up a portion of the focal plane without a gap.

5. Confocal microscope according to one of Claims 1-4, in which a light source array (4, 4a) for generating a multiplicity of mutually distanced light sources is arranged in a plane conjugate to the focal plane of the objective (7) and in which the positions of the light sources are conjugate to the positions of the transparent regions (4₁ - 4₂₀) of the diaphragm array (4, 4b).

6. Confocal microscope according to one of Claims 1-5, in which detector array (11) has a multiplicity of linear sensor columns arranged parallel to one another, and the displacement of the charges is performed in the direction of the columns.

7. Confocal microscope according to Claim 6, in which the diaphragm array has a multiplicity of transparent regions (4₁ - 4₂₀), and in which at least one transparent region (4₁ - 4₂₀) of the diaphragm array (4, 4b) is projected onto each column of the sensor array.

8. Confocal microscope according to Claim 7, in which the transparent regions of the diaphragm array (4, 4a, 4b) form a two-dimensional rhombic grid.

9. Confocal microscope according to Claim 7, in which the transparent regions of the diaphragm array (4, 4a, 4b) form a rectangular two-dimensional grid.

10. Confocal microscope according to one of Claims 1-9, in which the diaphragm array (4, 4b) is projected onto the sensor array (11).

11. Confocal microscope according to one of Claims 6-10, in which the sensor array (37) has a plurality of mutually independent component sensor arrays (38, 39, 40) which are arranged one behind another in the column direction and are arranged offset from one another by a modulus in the row direction, Δ = d/n holding for the modulus of the offset, and d being the dimension of the individual sensors in the row direction, and n being the number of the component sensor array.

12. Confocal microscope according to Claim 11, in which the diaphragm array (41) is projected anamorphotically onto the sensor array (37).

## Revendications

1. Microscope confocal avec
- un plateau de balayage (9) pour déplacer un objet (8) perpendiculairement à l'axe optique du microscope,
- un réseau de diaphragmes (4, 4a, 4b) dans un plan conjugué du plan de focalisation de l'objectif du microscope (7),
- un réseau de capteurs (11) placé derrière le réseau de diaphragmes (4, 4b) avec une multiplicité d'éléments sensibles à la lumière, des stockages de la charge correspondant aux éléments sensibles à la lumière et un dispositif pour décaler les charges stockées dans les stockages de charges d'un stockage vers un autre stockage, et
- une unité de synchronisation (13, 24) qui effectue un décalage des charges correspondant au déplacement du point image d'un point objet dans le plan du réseau de capteurs (11).

2. Microscope confocal selon la revendication 1, dans lequel le déplacement de l'échantillon s'effectue le long de trajectoires linéaires.

3. Microscope confocal selon la revendication 1 ou 2, dans lequel le réseau de diaphragmes (4, 4a, 4b) reste fixe lors du déplacement de l'échantillon par rapport à la trajectoire des rayons.

4. Microscope confocal selon la revendication 3, dans lequel le réseau de diaphragmes (4, 4b) est formé de telle sorte que les trajectoires des images des domaines transparents (4₁ - 4₂₀) dans le plan de focalisation de l'objectif (7) remplissent complètement une partie du plan de focalisation.

5. Microscope confocal selon une des revendications 1 - 4, dans lequel le réseau de sources lumineuses (4, 4a) est disposé pour la génération d'une multiplicité de sources lumineuses espacées l'une de l'autre dans un plan conjugué du plan de focalisation de l'objectif (7), et dans lequel les positions des sources lumineuses sont conjuguées des positions des domaines transparents (4₁ - 4₂₀) du réseau de diaphragmes (4, 4b).

6. Microscope confocal selon une des revendications 1 - 5, dans lequel le réseau de détecteurs (11) présente une multiplicité de fentes de capteurs linéaires disposés parallèlement les unes par rapport aux autres et il se produit un décalage des charges dans la direction des fentes.

7. Microscope confocal selon la revendication 6, dans lequel le réseau de diaphragmes présente une multiplicité de domaines transparents (4₁ - 4₂₀) et dans lequel au moins un domaine transparent (4₁-4₂₀) du réseau de diaphragmes (4, 4b) est représenté sur chaque fente du réseau de capteurs.

8. Microscope confocal selon la revendication 7, dans lequel les domaines transparents du réseau de diaphragmes (4, 4a, 4b) forment une grille rhombiforme bidimensionnelle.

9. Microscope confocal selon la revendication 7, dans lequel les domaines transparents du réseau de diaphragmes (4, 4a, 4b) forment une grille rectangulaire bidimensionnelle.

10. Microscope confocal selon une des revendications 1 - 9, dans lequel le réseau de diaphragmes (4, 4b) est représenté sur le réseau de capteurs (11).

11. Microscope confocal selon une des revendications 6 - 10, dans lequel le réseau de capteurs (37) présente plusieurs réseaux de capteurs partiels (38, 39, 40) indépendants les uns des autres et disposés les uns derrière les autres dans la direction des fentes, qui sont disposés dans la direction des lignes de manière décalée les uns par rapport aux autres dans lequel le décalage vaut Δ = d/n et dans lequel d est la dimension des capteurs individuels dans la direction des lignes et n le nombre de réseaux de capteurs partiels.

12. Microscope confocal selon la revendication 11, dans lequel le réseau de diaphragmes (41) est représenté sur le réseau de capteurs (37) par anamorphose.
